# EUROPÄISCHE PATENTSCHRIFT

(11) **EP 3 081 088 B1**
(45) Veröffentlichungstag und Bekanntmachung des Hinweises auf die Patenterteilung: **12.09.2018**
(21) Anmeldenummer: 15163849.1
(22) Anmeldetag: 16.04.2015
(51) Int. Cl.: F04C 14/00, F04C 13/00, F04C 2/344, A22C 11/06, A22C 11/08

(54) **FÜLLMASCHINE UND VERFAHREN ZUM ÜBERWACHEN DES VERSCHMUTZUNGSZUSTANDS IN EINEM VAKUUMSYSTEM EINER FÜLLMASCHINE**
FILLING MACHINE AND METHOD FOR MONITORING THE CONTAMINATION IN A VACUUM SYSTEM OF A FILLING MACHINE
MACHINE DE REMPLISSAGE ET PROCÉDÉ DE SURVEILLANCE DE L'ÉTAT D'ENCRASSEMENT DANS UN SYSTÈME À VIDE D'UNE MACHINE DE REMPLISSAGE

(43) Veröffentlichungstag der Anmeldung: 19.10.2016
(73) Patentinhaber: Albert Handtmann Maschinenfabrik GmbH & Co. KG, 88400 Biberach (DE)
(72) Erfinder: Maile, Bernd, 88422 Oggelshausen (DE); Miller, Claus-Peter, 87634 Obergünzburg (DE); Staudenrausch, Martin, 88400 Biberach (DE); Sailer, Guenter, 88471 Laupheim (DE); Nusser, Marcel, 88400 Biberach (DE)
(74) Vertreter: Grünecker Patent- und Rechtsanwälte PartG mbB

(56) Entgegenhaltungen:
- EP-A1- 1 044 612
- EP-A1- 2 525 098
- EP-A1- 2 628 391
- DE-C1- 19 925 417
- US-A1- 2014 212 558

## Beschreibung

Die Erfindung betrifft eine Füllmaschine sowie ein Verfahren zum Überwachen des Verschmutzungszustands eines Sammelbehälters und /oder eines Kanals mit dem der Sammelbehälter verbunden ist einer solchen Füllmaschine gemäß den Oberbegriffen der Ansprüche 1 und 16.

Eine Füllmachine sowie ein Verfahren gemäß den Oberbegriffen der Ansprüche 1 und 16 sind bereits aus der DE 19 925 417 C1 bekannt.

Bei der Wurstherstellung wird mit Hilfe einer Füllmaschine pastöse Masse über einen Trichter und eine Flügelzellenpumpe in ein Füllrohr geschoben, wobei die pastöse Masse dann beispielsweise aus dem Füllrohr in eine Wursthülle ausgestoßen wird. Um Lebensmittel, insbesondere pastöse Masse, wie Brät, haltbar zu machen, wird diesen Massen möglichst viel Luft entzogen. Dazu wird eine Vakuumpumpe an die Flügelzellenpumpe für die pastöse Masse angeschlossen, um die Flügelzellen der Flügelzellenpumpe zu evakuieren. Entsprechende Füllmaschinen bzw. Flügelzellenpumpen sind beispielsweise in der EP 1 044 612 sowie EP 1 837 524 gezeigt. Die Fig. 10 zeigt einen Querschnitt durch eine entsprechende Flügelzellenpumpe. Hier wird deutlich, dass in der Seitenwand der Flügelzellenpumpe eine Evakuierungsöffnung vorgesehen ist, die über einen Kanal zur Vakuumpumpe führt.

Beim Evakuieren der Förderzellen kommt es jedoch vor, dass Bestandteile der pastösen Masse in Richtung Vakuumpumpe mitgerissen werden. Aus diesem Grund ist ein Sammelbehälter zwischen Förderpumpe und Vakuumpumpe vorgesehen, um mitgerissene pastöse Masse, Schmutz und Wasser zu sammeln. Auch beim Reinigen der Flügelzellenpumpe geraten Bestandteile der geförderten Masse, Wasser und Schmutz in diesen Sammelbehälter. Somit kann die Vakuumpumpe und auch ein davor geschalteter Luftfilter geschützt werden.

Der Sammelbehälter muss in regelmäßigen Zeitabständen geleert und gereinigt werden, um die Ausbreitung von krankheitserregenden Organismen und unangenehmen Gerüchen zu verhindern. Außerdem muss verhindert werden, dass die im Sammelbehälter gesammelte Masse einen bestimmten Füllstand übersteigt, d. h., dass verhindert werden muss, dass die Vakuumverbindung von der Förderpumpe zur Vakuumpumpe unterbrochen wird (wenn beispielsweise die gesammelte Masse den Sammelbehälter vollständig füllt und bereits in die Vakuumleitungen aufsteigt, so dass die Vakuumleitungen verstopfen). Sonst kommt es zu einem unerwünschten Druckanstieg in den Förderzellen. Darüber hinaus muss auch der Vakuumkanal zwischen Förderwerk und Sammelbehälter regelmäßig gereinigt werden.

Bei den herkömmlichen Füllmaschinen ist es im betriebsbereiten Zustand nicht möglich den Vakuumkanal zu inspizieren um zum richtigen Zeitpunkt zu entscheiden, ob der Vakuumkanal gereinigt werden muss.

Die Zugänglichkeit zum Vakuumkanal ist bisher nur von der Oberseite des geöffneten Förderwerks möglich. Das heißt, dass, wenn ein z. B. verstopfter Vakuumkanal gereinigt werden muss, zunächst der Fülltrichter der Füllmaschine entleert werden muss, um dann das Schwenkgehäuse, an dem der Fülltrichter befestigt ist und an dessen unterem Ende sich der Deckel der Flügelzellenpumpe befindet, nach oben zu klappen. Eine Kontrolle des Vakuumkanals ist kaum möglich, eine Kontrolle des Sammelbehälters ist umständlich, da hier z.B. der Sammelbehälter hinter einer Klappe zu inspizieren ist, wobei zur Inspektion das Vakuum abzuschalten ist. Selbst bei geöffneter Flügelzellenpumpe kann der Vakuumkanal und/oder der Sammelbehälter nicht ausreichend kontrolliert werden.

Hiervon ausgehend liegt der vorliegenden Erfindung die Aufgabe zugrunde, auf einfache Art und Weise den Vakuumkanal und/oder den Sammelbehälter zu inspizieren und zu reinigen.

Erfindungsgemäß wird die Aufgabe durch die Merkmale der Ansprüche 1 und 16 gelöst.

Die erfindungsgemäße Füllmaschine zum Herstellen von Würsten weist eine Flügelzellenpumpe zum Fördern pastöser Masse auf, sowie eine Vakuumpumpe zum Erzeugen eines Unterdrucks in Flügelzellen der Flügelzellenpumpe. Die Flügelzellenpumpe ist über einen Sammelbehälter mit der Vakuumpumpe verbunden. Der Sammelbehälter dient dazu, mitgerissene pastöse Masse und Flüssigkeiten zu sammeln. Die Füllmaschine weist eine vorzugsweise nach oben oder schräg nach oben gerichtete Inspektionsöffnung auf, die über einen Kanal mit dem Sammelbehälter verbunden ist zum Inspizieren des Kanals und/oder des Sammelbehälters. D.h. die Inspektionsöffnung kann in einer Horizontalebene aber auch in einer Ebene, die zur Horizontalebene geneigt ist, liegen, z.B. unter einem Winkel von 0° - 45°, insbesondere 0° - 15°.

Das bedeutet, dass vorzugsweise die von oben frei einsehbare Inspektionsöffnung ermöglicht, den Kanal und/oder den Sammelbehälter auf Verschmutzung zu überprüfen, ohne dass das Flügelzellenförderwerk oder eine Klappe zum Sammelbehälter geöffnet werden muss. Von oben bedeutet hier aus einer Position oberhalb der Flügelzellenpumpe bzw. des Maschinengehäuses. Somit kann auf einfache Art und Weise der Verschmutzungsgrad des Kanals und/oder des Sammelbehälters ermittelt werden. Darüber hinaus bietet die Inspektionsöffnung auch einen Zugang zu dem Kanal, um den Kanal bei Bedarf zu reinigen, ohne dass aufwändige Maßnahmen notwendig sind.

Vorteilhafterweise steht der Kanal mit einer Evakuierungsöffnung in der Flügelzellenpumpe in Verbindung. Das bedeutet, dass der Kanal der Vakuumkanal ist, über den die Flügelzellen der Flügelzellenpumpe evakuiert werden oder zumindest ein Teil dieses Vakuumkanals bzw. dieser Vakuumverbindung ist. Die Inspektionsöffnung kann entweder innerhalb des Innenraums der Flügelzellenpumpe angeordnet sein oder vorzugsweise außerhalb.

Vorteilhafterweise ist die Inspektionsöffnung außerhalb des Innenraums der Flügelzellenpumpe angeordnet. So sind der Kanal und/oder der Sammelbehälter von einer Position oberhalb des geschlossenen Deckels der Flügelzellenpumpe durch die Inspektionsöffnung frei einsehbar.

D.h., dass die Flügelzellenpumpe zum Überprüfen der Verschmutzung nicht geöffnet werden muss, so dass beispielsweise ein Deckel der Flügelzellenpumpe zusammen mit einem Schwenkgehäuse und einem darauf angeordneten Trichter nicht verschwenkt werden muss. Ein wesentlicher Vorteil besteht auch darin, dass der Kanal und/oder Sammelbehälter inspiziert und gereinigt werden können, ohne dass der Trichter dazu geleert werden muss.

Gemäß einer bevorzugten Ausführungsform der vorliegenden Erfindung ist die Inspektionsöffnung z. B. in einem Deckel der Flügelzellenpumpe angeordnet. Dies ist dann der Fall, wenn bei bestimmten Maschinentypen das Schwenkgehäuse, auf dem der Vakuumtrichter angeordnet ist und an dessen Unterseite der Deckel befestigt ist, kleiner ist als der Deckel, derart, dass der Deckel über das Schwenkgehäuse vorsteht. Es ist aber auch möglich, dass die Inspektionsöffnung sich im Schwenkgehäuse befindet, und sich dann eine Aussparung von der Inspektionsöffnung durch das Schwenkgehäuse und den Deckel zu dem Kanal erstreckt. Alternativ ist es auch möglich, dass sich die Inspektionsöffnung in dem Maschinengehäuse befindet, d. h. in der Oberfläche der Füllmaschine seitlich neben dem Deckel und dem Schwenkgehäuse. Alle zuvor genannten Ausführungsformen ermöglichen, dass der Kanal und/oder der Sammelbehälter vorteilhafterweise bei geschlossenem Deckel durch die Inspektionsöffnung inspizierbar sind.

Vorteilhafterweise ist eine freie Einsehbarkeit von der Inspektionsöffnung durch den Kanal vorzugsweise bis zum Sammelbehälter gegeben.

Dabei ist der Kanal im Wesentlichen gerade ausgebildet, insbesondere verläuft der Kanal unter einem Winkel von 0° bis 45° vorzugsweise 0° - 15° zu einer vertikalen Längsachse der Füllmaschine. Unter "im Wesentlichen gerade" versteht man in dieser Anmeldung, dass der Kanal entweder gerade ist oder aber die Krümmung oder Verwinkelung des Kanals so klein ist, dass von der Inspektionsöffnung aus der Einlass des Sammelbehälters zumindest teilweise erkannt werden kann, d. h., dass es zumindest einen geraden Strahlengang gibt, der die Inspektionsöffnung mit dem Einlass zum Sammelbehälter verbindet. Somit kann der Bediener einfach von oben durch den Kanal bis zum Sammelbehälter durchschauen.

Gemäß einer bevorzugten Ausführungsform befindet sich die Evakuierungsöffnung im Pumpendeckel. Bislang befand sich die Evakuierungsöffnung hauptsächlich in der Seitenwandung des Pumpengehäuses. Bedingt durch einen radialen Dichtspalt zwischen Flügel und Flügelzellenpumpengehäuse wird vom Rotor sowie dem Pumpflügel pastöse Masse in den Evakuierungsbereich, d. h. den Bereich, in dem die Evakuierungsöffnung angeordnet ist, mitgeschleppt. Dieses mitgeschleppte Material setzt sich dann an der seitlichen Pumpenwand im Evakuierungsbereich ab und verschließt mit der Zeit die Evakuierungsöffnung in der Pumpenwand. Darüber hinaus wird pastöse Masse in den Kanal und Sammelbehälter mitgeschleppt. Folglich wird die Evakuierung und somit auch die Portionsgenauigkeit schlechter. Gemäß der vorliegenden Erfindung befindet sich nun die Evakuierungsöffnung im Pumpendeckel, d. h., dass nach oben abgesaugt wird, bzw. die Flügelzellen nach oben hin entlüftet werden, wobei durch den Pumpendeckel abgesaugt wird. Immer wenn ein Pumpenflügel unter der Evakuierungsöffnung durchfährt wird die pastöse Masse, falls doch etwas am Pumpendeckel abgelagert wurde, vom Pumpenflügel mitgenommen und die Bohrung somit freigehalten. Das Freihalten der Evakuierungsöffnung am Pumpendeckel ist möglich, weil der Spalt zwischen Pumpenflügel und Pumpendeckel deutlich kleiner ist als der radiale Spalt zwischen Pumpenwand und Pumpenflügel. Somit wird ein Verstopfen der Evakuierungsbohrung durch mitgeschlepptes Brät vermieden.

Die Inspektionsöffnung ist verschließbar ausgebildet. Die Inspektionsöffnung kann mit Hilfe eines Verschlusselements verschlossen und vorzugsweise auch wieder geöffnet werden. Vorzugsweise ist das Verschlusselement als axial beweglicher Kolben ausgebildet. Das Verschluss-element kann auch ein Schauglas aufweisen, so dass der Bediener auch während eines laufenden Prozesses durch das Schauglas den Kanal und/oder den Sammelbehälter inspizieren kann und sofort auf übermäßige Verschmutzungen aufmerksam wird.

Gemäß einer bevorzugten Ausführungsform ist die Inspektionsöffnung im oberen Bereich einer Aussparung angeordnet. Diese Aussparung kann beispielsweise im Deckel der Flügelzellenpumpe und/oder dem Schwenkgehäuse oder aber dem Maschinengehäuse angeordnet sein. Die Aussparung ist durch die Inspektionsöffnung nach oben geöffnet und weist eine umlaufende Seitenwandung auf, sowie einen sich daran anschließenden unteren Bodenbereich. Der Kanal mündet vorzugsweise in den unteren Bereich der Aussparung, so dass die Inspektionsöffnung über die Aussparung mit dem Kanal verbunden ist. Vorteilhafterweise mündet auch ein weiterer Kanalabschnitt, der mit der Evakuierungsöffnung in der Flügelzellenpumpe verbunden ist vorzugsweise in den unteren Bereich der Aussparung. Somit ist die Flügelzellenpumpe über die Evakuierungsöffnung, den weiteren Kanalabschnitt, die Aussparung und den Kanal mit dem Sammelbehälter verbunden.

Wenn auch der weitere Kanalabschnitt mit dem unteren Bereich der Aussparung verbunden ist, so ergibt sich der Vorteil, dass auch der Kanalabschnitt und die Evakuierungsöffnung von oben über die Inspektionsöffnung einsehbar sind. Somit kann bei geöffnetem Förderwerk der gesamte Bereich von der Evakuierungsöffnung bis zum Kanal und vorzugsweise bis zum Sammelbehälter inspiziert werden.

Vorteilhafterweise ist der Kolben in der Aussparung axial beweglich angeordnet, derart, dass er in einer unteren Position entweder den Kanal, der mit dem Sammelbehälter verbunden ist und/oder den weiteren Kanalabschnitt verschließt, d. h. den Kanal von dem weiteren Kanalabschnitt abtrennt.

Der axial bewegliche Kolben kann auch komplett aus der Aussparung entfernt werden, damit beispielsweise der Kanal besser inspiziert und gereinigt werden kann. Ferner ist es möglich, den axial beweglichen Kolben so weit nach oben zu bewegen, dass der Kanal und der weitere Kanalabschnitt belüftet werden können. Im eingesetzten Zustand dichtet der Kolben die Aussparung nach außen ab. Der Kolben kann vorzugsweise manuell axial bewegt werden, beispielsweise mit Hilfe eines Gewindes, Bajonettverschlusses, etc..

Es ist aber auch möglich, einen angetriebenen Verschlusszylinder vorzusehen, der die Vakuumverbindung zwischen Vakuumpumpe und der Flügelzellenpumpe trennt, wobei der Verschlusszylinder vorzugsweise von einer Position in Vertikalrichtung betrachtet unterhalb des Deckels in den Kanal eingefahren wird .

Gemäß einer bevorzugten Ausführungsform ist im Verschlusselement und / oder im Deckel der Flügelzellenpumpe ein Sensor integriert, insbesondere zum Messen der Temperatur und / oder des Drucks oder der Dichte oder des Luftgehalts etc. Auch ein optischer Sensor kann im Verschlusselement integriert sein, der beispielsweise den Kanal und/oder den Sammelbehälter optisch erfasst und auf einem Display darstellt. Gemäß einer bevorzugten Ausführungsform kann auch der weitere Kanalabschnitt und gegebenenfalls die Evakuierungsöffnung optisch von diesem Sensor erfasst werden. Die Sensorsignale können der Steuerung der Füllmaschine zugeführt und dort ausgewertet werden und somit zur automatischen Prozessüberwachung und Optimierung dienen.

Vorteilhafterweise ist der Kanal zumindest abschnittsweise aus transparentem Material ausgebildet, z. B. als transparenter Schlauch, der an der Aussparung befestigt ist. Auch der Sammelbehälter ist vorzugsweise zumindest teilweise aus einem transparenten Material ausgebildet. Dann kann mindestens eine Beleuchtung (vorzugsweise LED -Strahler) zum Beleuchten des Kanals und/oder des Sammelbehälters vorgesehen werden, um den Kanal und/oder den Sammelbehälter von außen zu beleuchten. Werden der Kanal und/oder Sammelbehälter von außen beleuchtet, so können Verunreinigungen besonders gut erfasst und erkannt werden und es ergibt sich eine spaltfreie Konstruktion.

Gemäß dem erfindungsgemäßen Verfahren zum Überwachen des Verschmutzungszustands eines Sammelbehälters und/oder eines Kanals über den der Sammelbehälter mit der Inspektionsöffnung verbunden ist, einer Füllmaschine wird vorzugsweise bei geschlossenem Deckel einer Flügelzellenpumpe über eine Inspektionsöffnung der Kanal, , und/oder der Sammelbehälter inspiziert. Die Inspektionsöffnung ist vorzugsweise nach oben (oder auch schräg nach oben) geöffnet.

Der Kanal kann, wenn festgestellt wird, dass der Kanal zu stark verschmutzt ist, über die Inspektionsöffnung gereinigt werden. Gleichzeitig kann, wenn über die Inspektionsöffnung erfasst wird, dass der Sammelbehälter zu voll ist, der Sammelbehälter geleert werden.

Gemäß einem bevorzugten Ausführungsbeispiel ist durch die Inspektionsöffnung auch die Evakuierungsöffnung und/oder der Kanalabschnitt der in Verbindung mit der Evakuierungsöffnung steht, inspizierbar und reinigbar. Das heißt, dass die Inspektionsöffnung zur Evakuierungsöffnung und/oder dem Kanalabschnitt derart angeordnet ist, dass eine freie Einsehbarkeit von oben gewährleistet ist. Das heißt auch, dass es einen geraden Strahlengang gibt, der die Inspektionsöffnung mit der Evakuierungsöffnung oder dem Kanalabschnitt, der in Verbindung mit der Evakuierungsöffnung steht, verbindet.

Die Erfindung wird nachfolgend unter Bezugnahme der folgenden Figuren näher erläutert.
- Fig. 1: zeigt grob schematisch eine Seitenansicht einer Füllmaschine gemäß einem Ausführungsbeispiel der vorliegenden Erfindung.
- Fig. 2: zeigt schematisch in perspektivischer Darstellung eine Flügelzellenpumpe.
- Fig. 3: zeigt grob schematisch eine erste Ausführungsform der vorliegenden Erfindung.
- Fig. 4: zeigt grob schematisch einen Schnitt durch einen Teil einer Füllmaschine gemäß einem zweiten Ausführungsbeispiel der vorliegenden Erfindung.
- Fig. 5: zeigt einen Längsschnitt durch einen Teil einer Füllmaschine gemäß einem dritten Ausführungsbeispiel gemäß der vorliegenden Erfindung in Evakuierposition.
- Fig. 6: zeigt das in Fig. 5 gezeigte Ausführungsbeispiel mit geschlossenen Verschlusszylinder.
- Fig. 7: zeigt die in Fig. 5 und 6 gezeigten Ausführungsbeispiele mit geöffnetem Verschluss in Belüftungsposition.
- Fig. 8: zeigt die in Fig. 5 bis 7 gezeigten Ausführungsbeispiele mit entnommenem Verschlusselement.
- Fig. 9: zeigt einen Querschnitt durch eine Flügelzellenpumpe gemäß der vorliegenden Erfindung.
- Fig. 10: zeigt einen Schnitt entlang der Linie II in Fig. 9.
- Fig. 11: zeigt einen Teilschnitt einer Füllmaschine gemäß der vorliegenden Erfindung gemäß einem weiteren Ausführungsbeispiel mit einer Inspektionsöffnung in Maschinengestell.
- Fig. 12a: zeigt grob schematisch eine weitere Ausführungsform gemäß der vorliegenden Erfindung.
- Fig. 12b: zeigt das in Fig. 12a gezeigte Ausführungsbeispiel mit geneigter Inspektionsöffnung.
- Fig. 13: zeigt den Verlauf des Kanals zwischen Sammelbehälter und Inspektionsöffnung.
- Fig. 14: zeigt einen Teilquerschnitt durch eine Flügelzellenpumpe gemäß dem Stand der Technik.

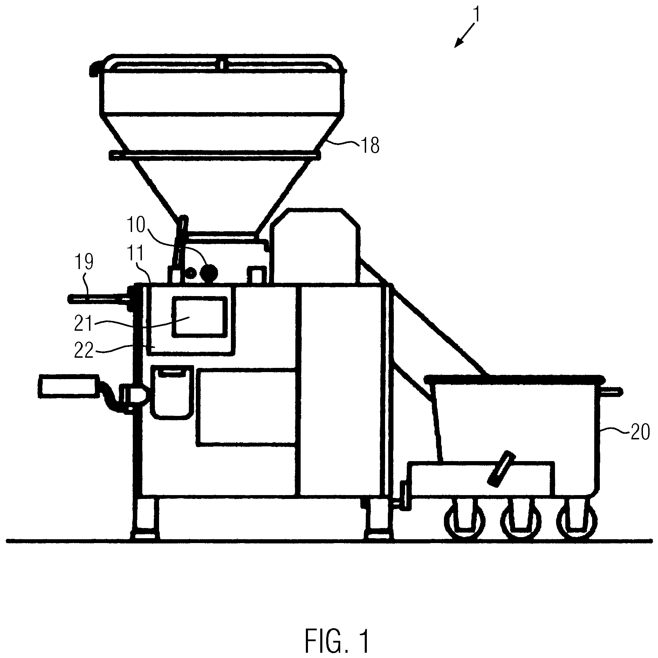

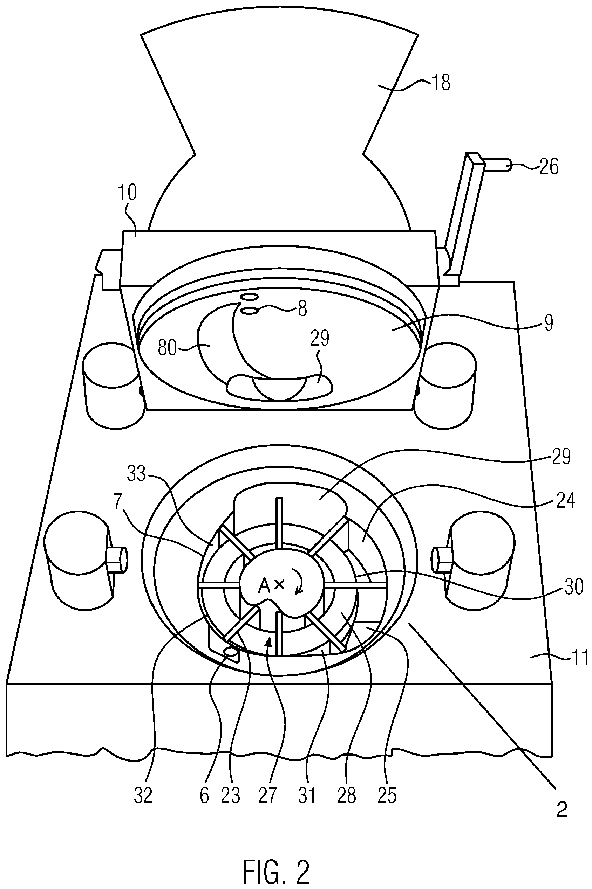

Fig. 1 zeigt grob schematisch eine Seitenansicht einer Füllmaschine gemäß der vorliegenden Erfindung. Die Füllmaschine 1 weist einen Trichter 18 auf, zur Aufnahme von pastöser Masse. Dieser Trichter 18 ist, wie auch aus Fig. 2 hervorgeht, auf einem Schwenkgehäuse 10 angeordnet derart, dass das Schwenkgehäuse einschließlich eines Deckels 9 einer Flügelzellenpumpe 2 zum Öffnen Flügelzellenpumpe 2 verschwenkt werden kann. Die Flügelzellenpumpe 2 ist unterhalb des Trichters angeordnet. Die Füllmaschine 1 weist weiter ein Füllrohr 19 auf. Die pastöse Masse wird durch die Flügelzellenpumpe 2 in das Füllrohr 19 geschoben und dann in bekannter Weise beispielsweise in Wursthüllen ausgestoßen. Die Füllmaschine weist weiter eine Steuerung 22 auf, sowie ein Display 21. In dieser Ausführungsform weist die Füllmaschine noch eine Hubeinrichtung auf mit einem Hubwagen 20, über den die pastöse Masse angehoben und in den Trichter 18 gekippt werden kann. Die Füllmaschine weist ein Maschinengehäuse 11 auf, in dem die Flügelzellenpumpe 2 angeordnet ist.

Fig. 2 zeigt den Aufbau der Flügelzellenpumpe 2 in größerem Detail. Die Flügelzellenpumpe hat eine seitliche Gehäusewand 24 sowie eine Bodenplatte 25 und ist mit dem Deckel 9 nach oben abschließbar. In der in Fig. 2 dargestellten Lage ist die Flügelzellenpumpe beispielsweise zu Reinigungszwecken geöffnet, so dass der Innenraum des Förderwerks zu sehen ist.

Zum Schließen kann der um eine an der Maschinengehäuseoberseite angebrachte Drehachse schwenkbare Deckel mittels Hebel 26 in die Betriebsposition nach unten verschwenkt werden. In dem Innenraum 27 ist ein exzentrisch angeordneter, in Drehung versetzbarer Rotor 28 vorgesehen. In dem Rotor 28 befinden sich die radial verschiebbaren Flügel 23, die mit der Gehäusewand 24 der Flügelzellenpumpe, dem Boden 25 und dem Deckel 9 und der Außenfläche des Rotors 28 Flügelzellen bilden und im abdichtenden Sinn zusammenwirken. Die Flügelzellenpumpe weist weiter einen Bräteinlass 29 und einen Brätauslass 31. An dem Bräteinlass 29 schließt sich in Drehrichtung A gesehen ein Druckbereich 30 an, in dem sich die Flügelzellen 7 in ihrem Volumen verkleinern. Dieser Druckbereich mündet in den Brätauslass 31, der zu einem nicht dargestellten Auslaufrohr führt. Dem Brätauslass folgt in Drehrichtung A gesehen ein Abdichtbereich 32, in dem die Außenfläche des Rotors 28 in direktem Kontakt mit der Innenwand des Pumpengehäuses kommt.

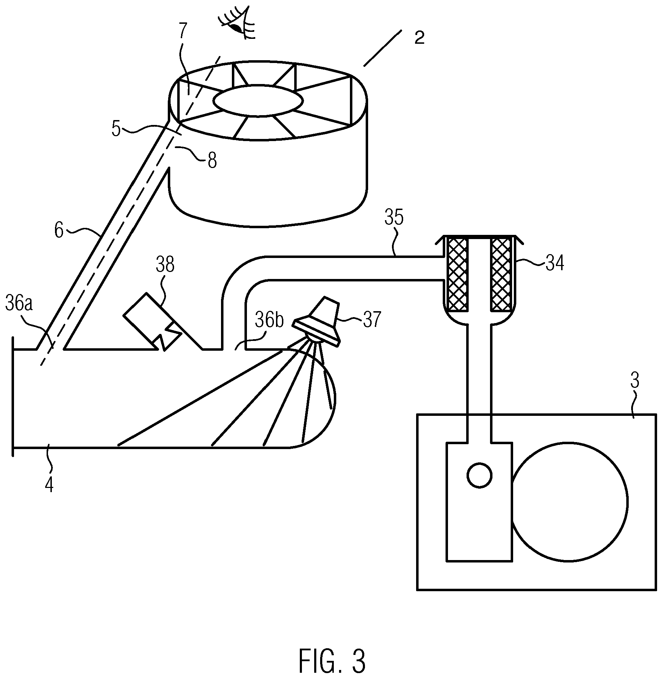

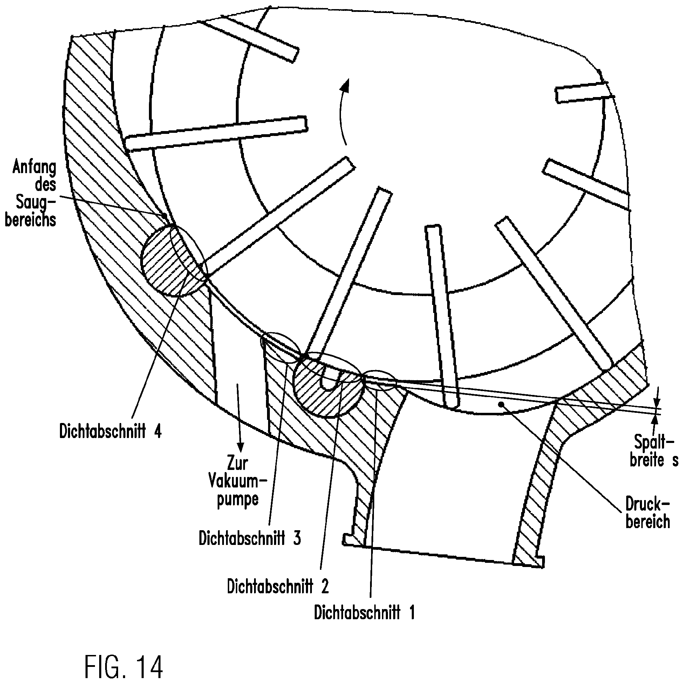

An den Abdichtbereich schließt sich der Vakuum- oder Saugbereich 33 an, der bis zum Bräteinlass 29 reicht. In diesem Vakuum- bzw. Saugbereich wird ein Unterdruck erzeugt, der das Einfüllen der pastösen Masse erleichtert und dazu dient, dass der pastösen Masse möglichst viel Luft entzogen werden kann. Zum Evakuieren der Flügelzellen 7 in diesem Vakuumbereich 33 (siehe hierzu auch Fig. 14) ist eine Evakuierungsöffnung 8 vorgesehen, über die mit Hilfe einer Vakuumpumpe 3, wie beispielsweise in Fig. 3 dargestellt ist, die Flügelzellen 7 evakuiert werden können, d.h. z.B. der Druck in den Flügelzellen reduziert wird.

Bei dem in Fig. 3 gezeigten Ausführungsbeispiel ist die Evakuierungsöffnung 8 in der Seitenwand 24 der Flügelzellenpumpe 2 angeordnet. Bei dem in Fig. 3 gezeigten Ausführungsbeispiel ist der geöffnete Deckel 9 einfachheitshalber nicht dargestellt. Ein Kanal 6 ist mit der Evakuierungsöffnung 8 verbunden und mündet in einen Sammelbehälter 4 für mitgerissene pastöse Masse. In dem Sammelbehälter kann mitgerissene pastöse Masse, Schmutz und Wasser gesammelt werden. Auch beim Reinigen der Flügelzellenpumpe geraten Bestandteile der geförderten Masse in diesen Sammelbehälter. Somit kann die Vakuumpumpe 3 und ein optional vorgesehener Luftfilter 34, der über eine Leitung 35 mit dem Sammelbehälter 4 verbunden ist, wirksam geschützt werden.

Der Füllstand in dem Sammelbehälter 4 darf nicht so hoch werden, dass die Öffnungen 36a und 36b zu dem Kanal 6 bzw. zu der Leitung 35 zum Luftfilter hin verstopfen, da sonst kein Vakuum mehr in den Flügelzellen 7 erzeugt werden kann. Außerdem darf auch der Kanal 6 nicht stark verschmutzen oder verstopfen, damit sichergestellt werden kann, dass ein ausreichendes Vakuum erzeugt wird. Bislang konnte man die Verschmutzung des Kanals 6 nur sehr schwer inspizieren. Den Füllstand, bzw. den Verschmutzungsgrad des Sammelbehälters 4 konnte man nur inspizieren, indem man das Vakuum an der Maschine abschaltete und die Abdeckklappe des Sammelbehälters am Maschinengehäuse 11 öffnete.

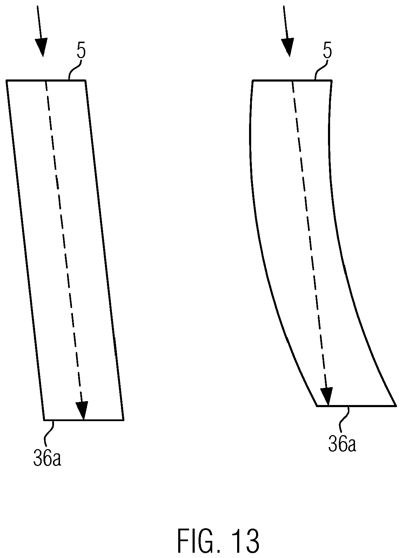

Gemäß der vorliegenden Erfindung ist nun eine Inspektionsöffnung 5 vorgesehen, die über einen Kanal 6 mit dem Sammelbehälter 4 verbunden ist, zum Inspizieren des Kanals und/oder des Sammelbehälters. Wie durch das Auge in Fig. 3 verdeutlicht wird, kann über die Inspektionsöffnung 5 das Innere des Kanals 6 inspiziert werden, wobei die Einsehbarkeit durch den Kanal bis zum Sammelbehälter 4 gegeben ist. Somit kann auf einfache Art und Weise erkannt werden, ob es Verunreinigungen im Kanal 6 gibt, und ob der Kanal 6 verstopft ist, oder ob der Sammelbehälter 4 zu voll ist. Um eine Einsehbarkeit zu gewähren, sollte der Kanal im Wesentlichen gerade, insbesondere unter einem Winkel von 0°. bis 15° zur vertikalen Längsachse der Füllmaschine von der Seitenwand 24 der Flügelzellenpumpe 2 abzweigen. Unter "im Wesentlichen gerade" versteht man in dieser Anmeldung, dass der Kanal entweder gerade ist oder aber die Krümmung bzw. Abweichung von einem geraden Verlauf des Kanals so klein ist, dass von der Inspektionsöffnung 5 aus der Einlass 36a des Sammelbehälters zumindest teilweise erkannt werden kann, d. h., dass es zumindest einen geraden Strahlengang gibt, der die Inspektionsöffnung mit dem Einlass 36a zum Sammelbehälter verbindet, wie insbesondere aus der Fig. 13 hervorgeht. Somit kann der Bediener einfach durch den Kanal bis zum Sammelbehälter durchschauen. In diesem Ausführungsbeispiel ist die Inspektionsöffnung, in Vertikalrichtung betrachtet, vorteilhafterweise in der oberen Hälfte, bzw. im oberen Drittel der Seitenwandung 24 angeordnet um eine gute Einsehbarkeit zu gewährleisten.

Es ist besonders vorteilhaft, wenn der Kanal 6 zumindest abschnittsweise aus transparentem Material ausgebildet ist, z. B. als transparenter Schlauch und/oder auch der Sammelbehälter zumindest abschnittsweise aus einem transparenten Material ausgebildet ist, derart, dass Licht von außen durch das Material scheinen kann. Dazu kann mindestens eine Beleuchtung 37, z.B. in Form eines LED Strahlers den Kanal 6 und/oder den Sammelbehälter 4 von außen beleuchten. Werden Kanal 6 und/oder der Sammelbehälter 4 von außen beleuchtet, so können Verunreinigungen besonders gut erfasst und erkannt werden. Ist beispielsweise der Kanal 6 verstopft, so erscheint ein dunkler Fleck. Zusätzlich kann eine Kamera 38 (z.B. in einer Aussparung in einer Position über dem höchsten Füllstand im Sammelbehälter 4) angeordnet sein, um den Innenraum des Sammelbehälters 4 aufzunehmen und beispielsweise auf einem Display, z. B. Display 21, darzustellen. Dies ermöglicht eine zusätzliche Überwachungsmöglichkeit. Die Beleuchtungseinrichtung ist beispielsweise ein LED-Strahler.

Bei dem in Fig. 3 gezeigten Ausführungsbeispiel befindet sich die Inspektionsöffnung 5 in der Seitenwand 24 der Flügelzellenpumpe 2. Dies bringt den Nachteil mit sich, dass zum Inspizieren und Reinigen des Kanals 6 der Deckel 9 der Flügelzellenpumpe geöffnet werden muss. Die nachfolgenden Ausführungsbeispiele entsprechen im Wesentlichen dem in Fig. 3 gezeigten Ausführungsbeispiel mit der Ausnahme, dass sich die Inspektionsöffnung nicht im Inneren der Flügelzellenpumpe 2 befindet, sondern außerhalb der Flügelzellenpumpe und nach außen gerichtet ist, vorzugsweise nach oben.

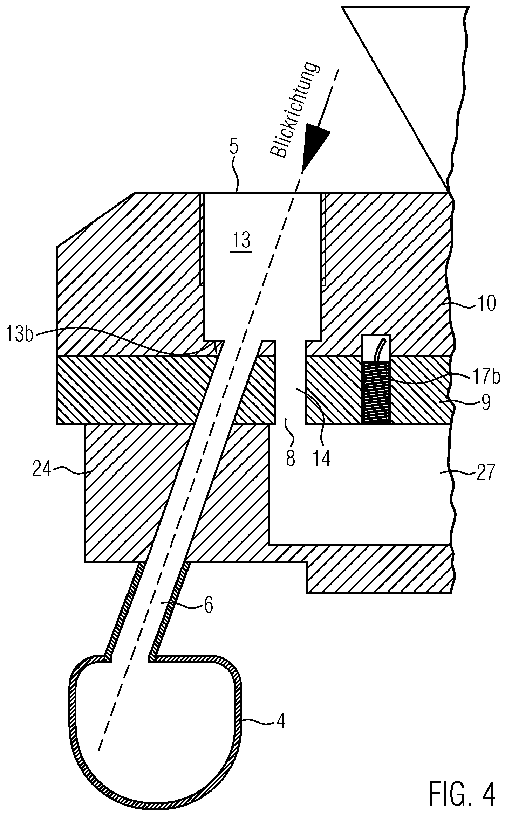

Fig. 4 zeigt einen entsprechenden Teillängsschnitt einer Füllmaschine entsprechend eines solchen Ausführungsbeispiels. Mit 27 ist schematisch die Kammer bzw. der Innenraum der Flügelzellenpumpe gezeigt, die hier durch den Deckel 9 verschlossen ist. Über dem Deckel ist das Schwenkgehäuse 10 angeordnet. In dem Schwenkgehäuse 10 ist die hier nach oben gewandte Inspektionsöffnung 5 vorgesehen. Die Inspektionsöffnung 5 ist hier im oberen Bereich einer Aussparung 13 vorgesehen, die im Schwenkgehäuse 10 ausgebildet ist. Die Aussparung 13 könnte sich auch bis in den Deckel 9 erstrecken. Der Kanal 6 erstreckt sich hier vom Wasserabscheider 4 durch die Gehäusewand 24 der Flügelzellenpumpe, den Deckel 9 und mündet in den unteren Bereich 13b der Aussparung 13. Die Aussparung 13 kann beispielsweise hohlzylindrisch ausgebildet sein, ist aber nicht auf diese Form beschränkt.

Die Evakuierungsöffnung 8 ist hier nicht in der Seitenwandung 24 vorgesehen, sondern im Deckel 9. Von der Evakuierungsöffnung 8 erstreckt sich ein weiterer Kanalabschnitt 14 zur Aussparung 13 und mündet ebenfalls in deren unteren Bereich. Gemäß der vorliegenden Erfindung befindet sich nun die Evakuierungsöffnung 8 im Pumpendeckel 9, d. h., dass nach oben abgesaugt wird bzw. die Flügelzellen nach oben hin entlüftet werden und durch den Pumpendeckel 9 abgesaugt wird. Immer, wenn ein Flügel 23 unter der Evakuierungsöffnung 8 durchfährt, wird die pastöse Masse, falls doch etwas am Pumpendeckel abgelagert wurde, vom Pumpenflügel mitgenommen und die Bohrung somit freigehalten. Das Freihalten der Evakuierungsöffnung 8 am Pumpendeckel ist möglich, weil der Spalt zwischen Pumpenflügel 23 und Pumpendeckel 9 deutlich kleiner ist als der radial Spalt zwischen Pumpenwand und Pumpenflügel bei den Lösungen, bei denen sich die Evakuierungsöffnung 8 im Seitenbereich befindet. Somit wird ein Verstopfen der Evakuierungsbohrung durch mitgeschlepptes Brät wirksam verhindert.

Der Kanal 6 ist also über die Aussparung 13 und dem Abschnitt 14 mit der Flügelzelle, d. h. der Evakuierungsöffnung 8 verbunden. Wie durch den Pfeil in Fig. 4 hervorgeht, der die Blickrichtung angibt, kann über die Inspektionsöffnung 5 das Innere des Kanals 6 und auch des Sammelbehälters 4 inspiziert werden. Somit kann der Bediener von oben, also von einer Position oberhalb des Deckels 9 und oberhalb des Schwenkgehäuses 10, den Verschmutzungsgrad auf einfache Art und Weise inspizieren, ohne dass der Deckel bzw. Deckel 9 und Schwenkgehäuse 10 aufgeklappt werden müssen. Auch ein Reinigen des Kanals 6 ist möglich - beispielsweise mit einer Bürste und oder Reinigungsflüssigkeit, ohne den Deckel 9 zu öffnen, so dass es auch nicht notwendig ist, dass der Trichter dabei entleert wird. Vorteilhafterweise ist die Evakuierungsöffnung 8 und der Kanalabschnitt 14 derart angeordnet, dass auch dieser Bereich über die Inspektionsöffnung 5 inspiziert werden kann, ohne dass die Flügelzellenpumpe geöffnet werden muss. Es wäre auch möglich, dass der Kanal 6 und /oder der Kanalabschnitt 14 nicht in den unteren Bereich , hier also den Boden münden, sondern seitlich in die Aussparung unter einem Winkel münden, derart dass von der Inspektionsöffnung aus in den Kanal 6 vorzugsweise bis in den Sammelbehälter und /oder in den Kanalabschnitt 14 vorzugsweise bis zur Evakuierungsöffnung eingesehen werden kann.

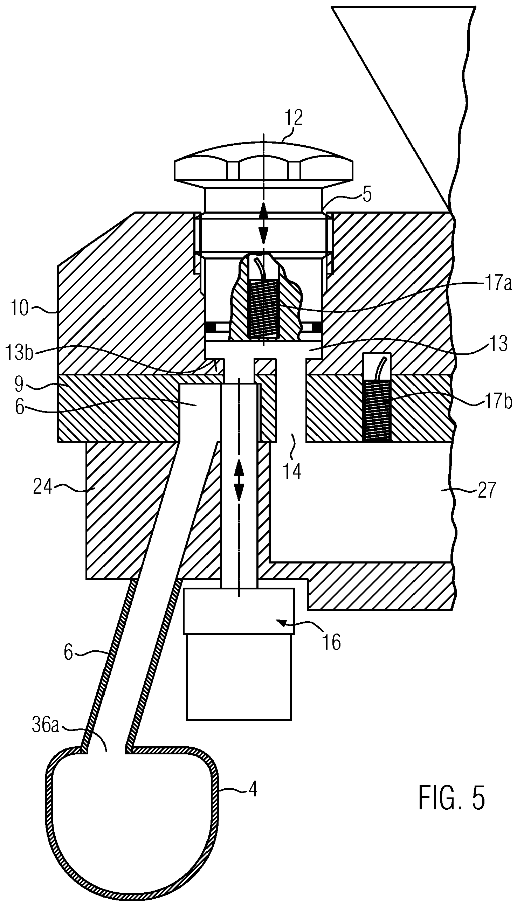

Vorteilhafterweise ist die Inspektionsöffnung 5 verschließbar ausgebildet. Die Inspektionsöffnung kann mit Hilfe eines Verschlusselements 12 verschlossen werden, wie insbesondere aus Fig. 5 hervorgeht, die eine weitere Ausführungsform der vorliegenden Erfindung beschreibt, die im Wesentlichen der in Fig. 4 gezeigten Ausführungsform entspricht. Das Verschlusselement ist hier als axial bewegbarer Kolben 12 ausgebildet. Der axial bewegliche Verschlusskolben ist als Vakuumverschluss ausgebildet und verschließt hier die Inspektionsöffnung 5. Der axial bewegliche Kolben 12 kann beispielsweise manuell in der Aussparung auf und ab bewegt werden, insbesondere durch ein Gewinde.

Wenn der in Fig. 5 gezeigte Kolben 12 noch weiter nach unten in seine unterste Position verfahren wird, kann er entweder den Kanal 6 und/oder den weiteren Kanalabschnitt 14, die beide in die Aussparung 13 münden, verschließen, d. h. den Kanal 6 von dem weiteren Kanalabschnitt 14 abtrennen. Zusätzlich ist hier ein Verschlusszylinder 16 vorgesehen, der den Kanal 6 von der Evakuierungsöffnung 8 trennt, derart, dass es keine Vakuumverbindung mehr zwischen der Vakuumpumpe und dem Förderwerk gibt. Der Verschlusszylinder 16 befindet sich hier im unteren Bereich des Deckels 9. Ein entsprechender Verschluss kann aber auch von oben oder von der Seite erfolgen. Die Betätigung des Verschlusszylinders kann elektrisch, pneumatisch oder hydraulisch erfolgen. Wesentlich ist lediglich, dass der Verschlusszylinder den Kanal 6 verschließt.

In dem Verschlusselement, hier dem Verschlusskolben 12, kann mindestens ein Sensor 17a vorgesehen sein zum Messen des Drucks oder der Temperatur oder des Füllstandes. Ein solcher Sensor bzw. solche Sensoren 17b können zusätzlich oder alternativ auch im Pumpendeckel 9 im Vakuum- oder Saugbereich der Flügelzellenpumpe angeordnet sein. Entsprechende Sensorsignale können der Steuerung 22 der Füllmaschine zugeführt werden und dort zur automatischen Prozessüberwachung und Optimierung ausgewertet und verwendet werden.

Ein entsprechender Drucksensor 17a, der einfach zu demontieren und zu reinigen ist, kann die Funktion des Evakuierungssystems zwischen Vakuumpumpe 3 und Verschlusskolben wirksam überwachen. Der Sensor 17b ist in der Lage, die realen Druckverhältnisse im Saugbereich der Flügelzellenpumpe zu überwachen. Beim Einsatz beider Sensor 17a, 17b ist eine detaillierte Aussage über mögliche Fehler (z. B. Verschluss von Vakuumkanälen) im Evakuierungssystem möglich.

Weicht beispielsweise der vom Sensor 17a gemessene Druck von einem Sollwert ab, so ist dies ebenfalls ein Indiz, dass eine Verunreinigung vorliegt und eine Reinigung notwendig ist.

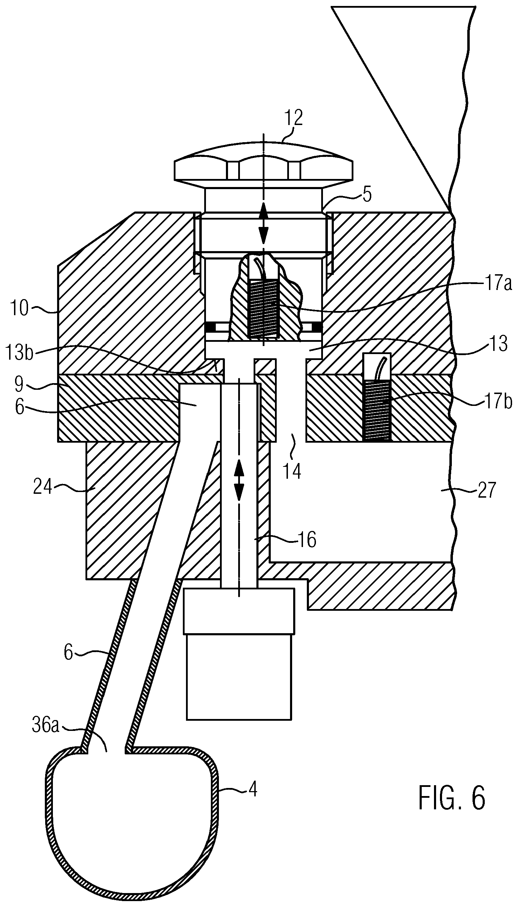

Fig. 6 zeigt das in Fig. 5 gezeigte Ausführungsbeispiel mit geschlossenem Verschlusszylinder 16. Der Verschlusszylinder 16 befindet sich hier in seiner oberen Position, so dass die Vakuumverbindung zwischen Sammelbehälter und Flügelzellenpumpe abgesperrt wird.

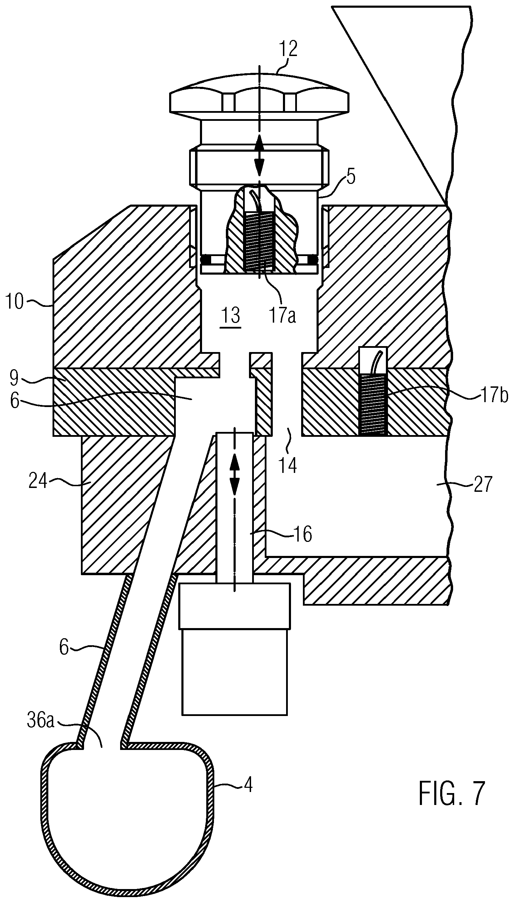

Fig. 7 zeigt die in Fig. 5 und 6 gezeigten Ausführungsbeispiele, wobei hier der Verschlusskolben 12 nach oben bewegt wurde und sich in einer Belüftungsposition befindet. Der Verschlusszylinder gibt hier den Weg vom Kanal 6 in Richtung der Inspektionsöffnung 5 frei.

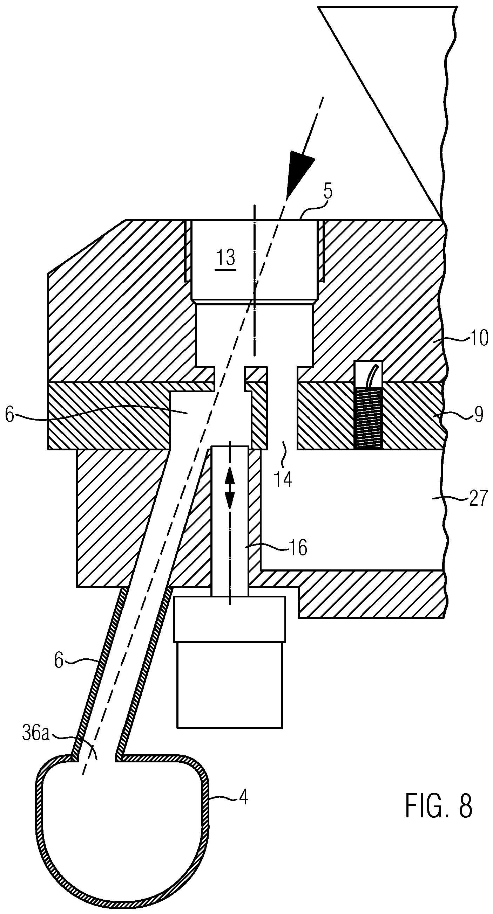

Fig. 8 entspricht dem in Fig. 5 bis 7 gezeigten Ausführungsbeispiel, wobei hier der Verschlusskolben 12 zur Inspektion und Reinigung entnommen worden ist. Wie deutlich aus der Fig. 8 hervorgeht, ist auch hier von oben eine freie Einsehbarkeit von der Inspektionsöffnung 5 durch den Kanal 6 bis zum Sammelbehälter 4 gegeben. Das heißt, es gibt einen Strahlengang, der die Inspektionsöffnung 5 mit dem Einlass 36a zum Sammelbehälter 4 verbindet. Der Bediener kann somit einfach erkennen, ob der Kanal 6 verschmutzt bzw. verstopft ist und ob der Sammelbehälter 4 zu voll ist.

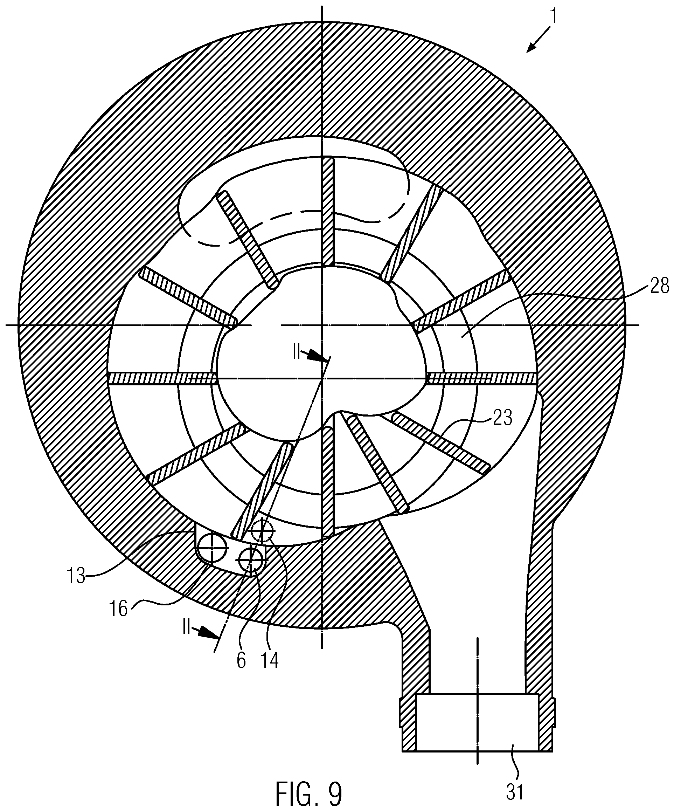

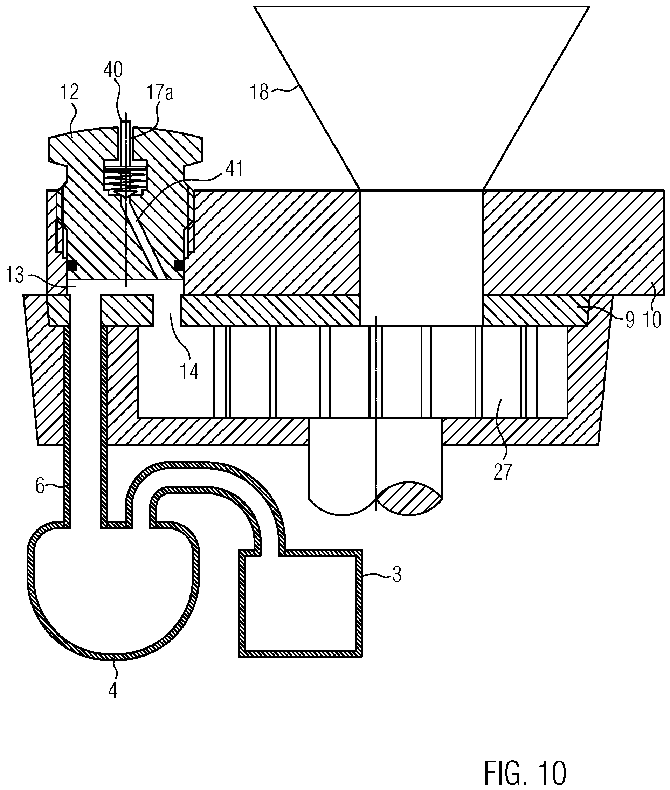

Fig. 9 zeigt einen Querschnitt durch eine Ausführungsform gemäß der vorliegenden Erfindung. Die Fig. 10 entspricht einer Schnittdarstellung entlang der Linie II in Fig. 9. Diese Ausführungsform entspricht im Wesentlichen den vorherigen Ausführungsformen, wobei hier in dem Verschlusselement 12 als Drucksensor ein höhenverstellbarer Stößel 40 vorgesehen ist. Dieser Stößel 40 dient zur optischen Überwachung der Druckverhältnisse. Dieser Stößel verändert seine vertikale Position in Abhängigkeit des Drucks im Vakuumbereich, d. h. im Saugbereich des Förderwerks und im Kanal 6. Der Stößel 40 wird durch eine vorgespannte Feder in einer bestimmten Position gehalten (in der der Vakuumbereich nicht verschlossen ist, d.h. der Kanal 41 mit der Außenatmosphäre verbunden ist). Der Sensor 17a ist über eine Leitung 41 mit dem Vakuumsystem verbunden. Bei Unterdruck wird der Stößel 40 in das Verschlusselement hineingezogen und schließt bündig mit dessen Oberfläche ab, d.h. verschließt den Vakuumbereich. Ist das eingestellte Vakuum erreicht ist der Kanal 41 verschlossen. Bei sich erhöhendem Druck wird der Stößel, ähnlich wie bei der Druckanzeige in einem Schnellkochtopf, nach oben geschoben und ragt aus dem Verschlusselement 12 nach oben heraus.Bei Druckabfall tritt der ggfs. z.B. rot markierte Stößel aus dem Verschlusselement heraus.

Über einen Druckanstieg und eine damit verbundene Veränderung der Position des Stößels kann man dann erkennen, dass gegebenenfalls der Kanal 6 und/oder der Sammelbehälter zu stark verschmutzt sind.

Bei den zuvor gezeigten Ausführungsbeispielen ist vorteilhafterweise die Evakuierungsöffnung 8 im Pumpendeckel 9 integriert. Das Prinzip der freien Einsehbarkeit ist jedoch ebenso realisiert, wenn die Evakuierungsöffnung 8 in einer Seitenwand 24 der Flügelzellenpumpe vorgesehen ist und ein entsprechender Kanalabschnitt 14 der mit der Evakuierungsöffnung verbunden ist, entweder direkt in den Kanal 6 oder aber z. B. in eine Aussparung 13 mündet.

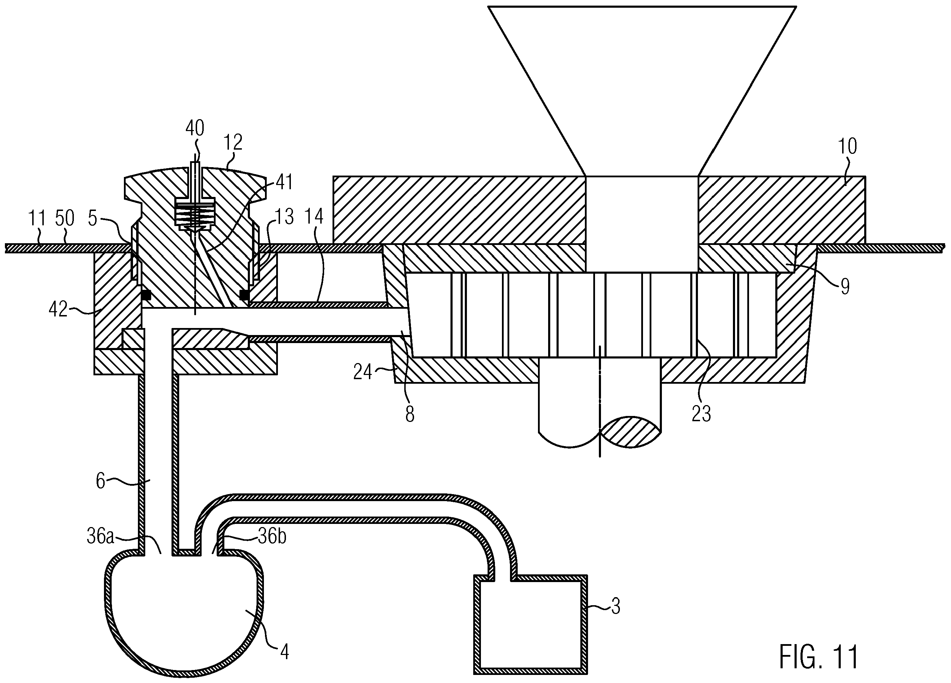

Fig. 11 zeigt eine entsprechende Anordnung, bei der die Evakuierungsöffnung 8 in der Gehäusewand 24 angeordnet ist. Dabei ist bei diesem Ausführungsbeispiel als zusätzlicher Unterschied die Inspektionsöffnung 5 nicht in Deckel 9 oder dem Schwenkgehäuse 10 angeordnet, sondern im Maschinengehäuse 11, d. h. hier der Oberseite oder der Seitenwand des Maschinengehäuses 11. Am Maschinengehäuse 11 ist bei diesem Ausführungsbeispiel ein Gehäuseabschnitt 42 an der oberen Wand des Maschinengehäuses 11 angeordnet, wobei hier die Aussparung 13 in dem Gehäuseabschnitt 42 ausgebildet ist. So ist auch hier die Vakuumpumpe 3 über den Sammelbehälter 4, den Kanal 6, Aussparung 13, den weiteren Kanalabschnitt 14 und die Evakuierungsöffnung 8 mit dem Förderwerk verbunden. Wie auch bei den vorhergehenden Ausführungsbeispielen kann die Vakuumverbindung zwischen Vakuumpumpe und Flügelzellenpumpe durch den Kolben 12 unterbrochen werden. Wenn auch nicht dargestellt, kann auch hier ein gesonderter Verschlusskolben 16 vorgesehen sein, um den Vakuumpfad zwischen Vakuumpumpe und Flügelzellenpumpe zu trennen. Auch bei diesem Ausführungsbeispiel kann bei entfernten Kolben 12 der Kanal 6 sowie der Sammelbehälter 4 inspiziert und auch einfach gereinigt werden.

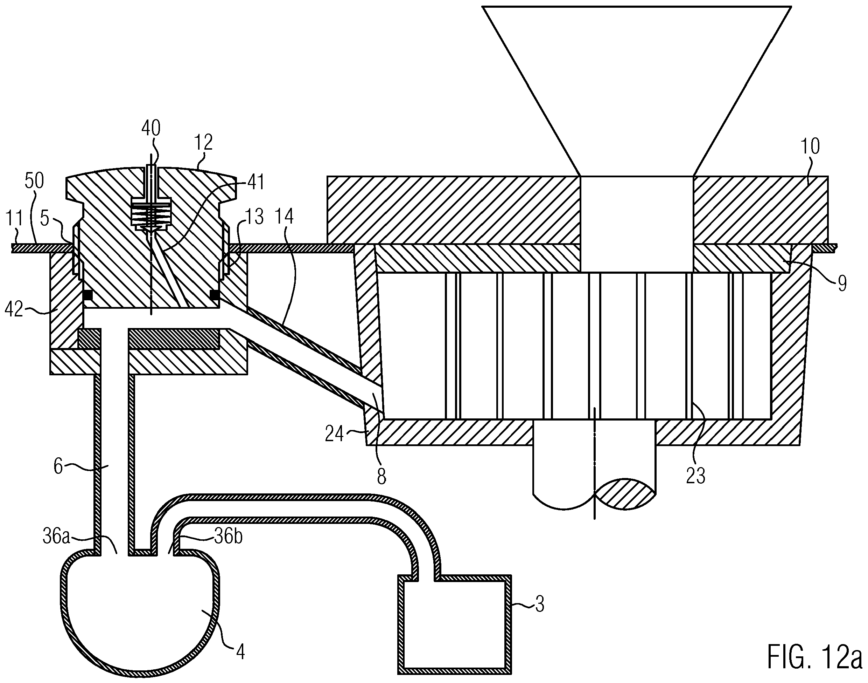

Fig. 12a zeigt die in Fig. 11 gezeigte Anordnung mit geneigtem Kanal 14. Bei dieser Anordnung ist auch der Kanalabschnitt 14 noch von oben über die Inspektionsöffnung 5 einsehbar. Bei diesem Ausführungsbeispiel liegt die Inspektionsöffnung seitlich neben der Flügelzellenpumpe 2, wie in Figur 11. Wie auch in Figur 11, kann hier von einer Position oberhalb der Oberfläche 50 des Maschinengehäuses 11 aus sowohl der Kanalabschnitt 14 als auch der Kanal 6 und der Sammelbehälter inspiziert werden.

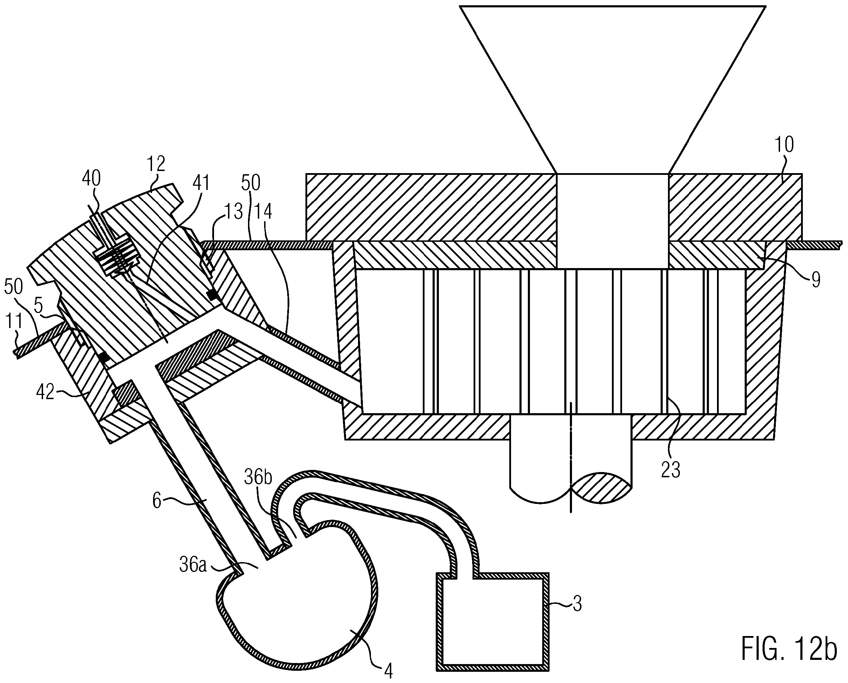

Wie aus Figur 12b hervorgeht, ist es auch möglich, dass die Ebene, in der die Inspektionsöffnung 5 liegt, unter einem Winkel zur Horizontalebene liegt. Dies gilt auch für alle anderen Ausführungsbeispiele. Auch hier kann von einer Position oberhalb der Oberfläche 50 des Maschinengehäuses der Kanalabschnitt 14, der Kanal 6 und der Sammelbehälter 4 inspiziert werden. Durch die Schrägstellung der Inspektionsöffnung 5 bzw. der Oberfläche des Maschinengehäuses in diesem Bereich ist der Kanalabschnitt 14 noch besser inspizierbar. Die Inspektionsöffnung,bzw. die Ebene in der die Inspektionsöffnung liegt, ist beispielsweise unter einem Winkel von größer 0° und kleiner 45° zur Horizontalebene geneigt.

Die vorherigen Ausführungsbeispiele in Zusammenhang mit den Fig. 5 bis 12 wurden mit einem axial verstellbaren Kolben als Verschlusselement beschrieben. Es ist jedoch auch möglich, die Inspektionsöffnung lediglich durch ein Schauglas zu verschließen. Dies ermöglicht während des Prozesses, den Kanal und/oder den Sammelbehälter oder aber auch den Kanalabschnitt 14, der zu der Evakuierungsöffnung 8 führt, zu inspizieren.

Gemäß dem erfindungsgemäßen Verfahren kann wie zuvor beschrieben der Verschmutzungszustand des Sammelbehälters 4 der Füllmaschine, zumindest aber der Kanal 6 inspiziert werden.

## Patentansprüche

1. Füllmaschine (1) zum Abfüllen pastöser Masse, insbesondere zur Wurstherstellung mit
- einer Flügelzellenpumpe (2) zum Fördern der pastösen Masse,
- eine Vakuumpumpe (3) zum Erzeugen eines Unterdrucks in den Flügelzellen (7) der Flügelzellenpumpe (2),
wobei die Flügelzellenpumpe (2) über einen Sammelbehälter (4) für mitgerissene pastöse Masse mit der Vakuumpumpe (3) verbunden ist, **gekennzeichnet durch** eine Inspektionsöffnung (5), die über einen Kanal (6) mit dem Sammelbehälter (4) verbunden ist, zum Inspizieren des Kanals (6) und/oder des Sammelbehälters (4).

2. Füllmaschine nach Anspruch 1, **dadurch gekennzeichnet, dass** der Kanal (6) und/oder der Sammelbehälter (4) von einer Position oberhalb der oberen Seite (50) des Maschinengehäuses (11) durch die Inspektionsöffnung frei einsehbar sind, wobei vorteilhafter Weise die Inspektionsöffnung (5) in einer Ebene liegt, die um 0° bis 45°, insbesondere 0° bis 15° zu einer Horizontalebene geneigt ist.

3. Füllmaschine nach Anspruch 1, **dadurch gekennzeichnet, dass** der Kanal (6) mit einer Evakuierungsöffnung (8) in der Flügelzellenpumpe (2) in Verbindung steht.

4. Füllmaschine nach mindestens einem der Ansprüche 1 bis 3 **dadurch gekennzeichnet, dass** die Inspektionsöffnung (8) in einem Deckel (9) der Flügelzellenpumpe (2) oder einem Schwenkgehäuse (10), an dem der Deckel (9) angeordnet ist oder in einem Maschinengehäuse (11) angeordnet ist, derart, dass der Kanal (6) und/oder der Sammelbehälter (4) bei geschlossenem Deckel (9) durch die Inspektionsöffnung (5) inspizierbar sind.

5. Füllmaschine nach mindestens einem der vorhergehenden Ansprüche, **dadurch gekennzeichnet, dass** es zumindest einen geraden Strahlengang gibt, der die Inspektionsöffnung (5) mit einem Einlass (36a) zum Sammelbehälter verbindet, wobei insbesondere der Kanal (6) im Wesentlichen gerade, insbesondere unter einem Winkel von 0° bis 45°, vorzugsweise 0° bis15° zu einer vertikalen Längsachse der Füllmaschine (1) verläuft.

6. Füllmaschine nach mindestens einem der vorhergehenden Ansprüche, **dadurch gekennzeichnet, dass** sich die Evakuierungsöffnung (8) im Deckel (9) der Flügelzellenpumpe (2) befindet.

7. Vorrichtung nach mindestens einem der Ansprüche 1 bis 6, **dadurch gekennzeichnet, dass** die Inspektionsöffnung (5) verschließbar ist, insbesondere mit einem Verschlusselement (12), vorzugsweise einem axial beweglichen Kolben (12) und / oder das Verschlusselement (12) ein Schauglas aufweist.

8. Füllmaschine nach mindestens einem der vorhergehenden Ansprüche, **dadurch gekennzeichnet, dass** die Inspektionsöffnung (5) im oberen Bereich einer Aussparung (13) angeordnet ist, wobei der Kanal (6) insbesondere in den unteren Bereich in die Aussparung (13) mündet und ein mit der Evakuierungsöffnung verbundener weiterer Kanalabschnitt (14) auch insbesondere in den unteren Bereich (15) in die Aussparung (13) mündet.

9. Füllmaschine nach Anspruch 8, **dadurch gekennzeichnet, dass** der axial bewegliche Kolben (12) in der Aussparung (13) axial beweglich ist und in einer unteren Position den Kanal (6) von dem weiteren Kanalabschnitt (14) abtrennen kann und/oder
aus der Aussparung (13) entfernt werden kann und/oder
soweit nach oben bewegt werden kann, dass der Kanal (6) und der weitere Kanalabschnitt (14) belüftet werden können.

10. Füllmaschine nach mindestens einem der vorhergehenden Ansprüche, **dadurch gekennzeichnet, dass** ein angetriebener Verschlusszylinder (16) vorgesehen ist, der die Vakuumverbindung zwischen der Vakuumpumpe (3) und der Flügelzellenpumpe (2) trennt.

11. Füllmaschine nach mindestens Anspruch 7, **dadurch gekennzeichnet, dass** im Verschlusselement (12) und/oder in dem Deckel (9) der Flügelzellenpumpe (2) ein Sensor (17) integriert ist, insbesondere zum Messen der Temperatur und/oder des Drucks oder des Füllstandes oder ein optischer Sensor, der den Kanal (6) und/oder den Sammelbehälter optisch erfasst und auf einem Display darstellt.

12. Füllmaschine nach mindestens einem der vorhergehenden Ansprüche, **dadurch gekennzeichnet, dass** der Kanal (6) zumindest abschnittsweise aus transparentem Material ausgebildet ist.

13. Füllmaschine nach mindestens einem der vorhergehenden Ansprüche, **dadurch gekennzeichnet, dass** der Sammelbehälter (4) zumindest teilweise aus transparentem Material ausgebildet ist.

14. Füllmaschine nach Anspruch 12 oder 13, **dadurch gekennzeichnet, dass** mindestens eine Beleuchtung (37,38) zum Beleuchten des Kanals (6) und/oder des Sammelbehälters (4) vorgesehen ist von außen.

15. Füllmaschine nach mindestens einem der vorhergehenden Ansprüche, **dadurch gekennzeichnet, dass** die Inspektionsöffnung (5) in der Seitenwand der Flügelzellenpumpe (2) angeordnet ist.

16. Verfahren zum Überwachen des Verschmutzungszustands eines Sammelbehälters (4) einer Füllmaschine (1) und/oder eines Kanals (6) über den der Sammelbehälter mit der Inspektionsöffnung verbunden ist nach mindestens einem der Ansprüche 1 bis 15, **dadurch gekennzeichnet, dass** insbesondere bei geschlossenem Deckel einer Flügelzellenpumpe (2) über eine Inspektionsöffnung (5) der Kanal (6) und/oder der Sammelbehälter (6) inspiziert werden können.

17. Verfahren nach Anspruch 16, **dadurch gekennzeichnet, dass** der Kanal (6) zum Sammelbehälter (4) über die Inspektionsöffnung (5) gereinigt wird.

18. Füllmaschine nach mindestens einem der Ansprüche 1-15, **dadurch gekennzeichnet, dass** durch die Inspektionsöffnung (5) die Evakuierungsöffnung (8) und/oder ein Kanalabschnitt (14), der in Verbindung mit der Evakuierungsöffnung (8) steht, inspizierbar ist.

## Claims

1. Filling machine (1) for filling a pasty mass, in particular for the production of sausages with
- a vane cell pump (2) for conveying said pasty mass,
- a vacuum pump (3) for generating negative pressure in the vane cells (7) of said vane cell pump (2),
where said vane cell pump (2) is in communication with said vacuum pump (3) via a collection container (4) for pasty mass that is dragged along, **characterized by**
an inspection opening (5) which is via a channel (6) in communication with said collection container (4) for inspecting said channel (6) and/or said collection container (4).

2. Filling machine according to claim 1, **characterized in that** said channel (6) and/or said collection container (4) can be freely inspected from a position above said upper side (50) of said machine housing (11) through said inspection opening, where said inspection opening (5) is advantageously located in a plane which is inclined by 0° to 45°, in particular 0° to 15° to a horizontal plane.

3. Filling machine according to claim 1, **characterized in that** said channel (6) is in communication with an evacuation opening (8) in said vane cell pump (2).

4. Filling machine according to at least one of the claims 1 to 3, **characterized in that** said inspection opening (8) is disposed in a cover (9) of said vane cell pump (2) or a pivot housing (10) on which said cover (9) is arranged, or in a machine housing (11), such that said channel (6) and/or said collection container (4) can be inspected through said inspection opening (5) when said cover (9) is closed.

5. Filling machine according to at least one of the preceding claims, **characterized in that** there is at least one straight optical path connecting said inspection opening (5) with an inlet (36a) to said collection container, where in particular said channel (6) extends substantially straight, in particular at an angle of 0° to 45°, preferably 0° to 5° to a vertical longitudinal axis of said filling machine (1).

6. Filling machine according to at least one of the preceding claims, **characterized in that** said evacuation opening (8) is located in said cover (9) of said vane cell pump (2).

7. Device according to at least one of the claims 1 to 6, **characterized in that** said inspection opening (5) is closable, in particular with a closure element (12), preferably an axially movable piston (12) and/or said closure element (12) comprises an inspection glass.

8. Filling machine according to at least one of the preceding claims, **characterized in that** said inspection opening (5) is disposed in the upper region of a recess (13), where said channel (6) opens in particular in the lower region into said recess (13) and a further channel section (14) being in communication with said evacuation opening also opens in particular in the lower region (15) into said recess (13).

9. Filling machine according to claim 8, **characterized in that** said axially movable piston (12) is axially movable in said recess (13) and can in a lower position separate said channel (6) from said further channel section (14) and/or
can be removed from said recess (13) and/or
can be moved so far upwardly that said channel (6) and said further channel section (14) can be vented.

10. Filling machine according to at least one of the preceding claims, **characterized in that** a driven closure cylinder (16) is provided which separates the vacuum connection between said vacuum pump (3) and said vane cell pump (2).

11. Filling machine according to at least claim 7, **characterized in that** a sensor (17) is integrated into said closure element (12) and/or into said cover (9) of said vane cell pump (2), in particular for measuring the temperature and/or the pressure or the filling level, or an optical sensor which optically detects said channel (6) and/or said collection container and illustrates this on a display.

12. Filling machine according to at least one of the preceding claims, **characterized in that** said channel (6) is formed at least in sections from transparent material.

13. Filling machine according to at least one of the preceding claims, **characterized in that** said collection container (4) is formed at least in sections from transparent material.

14. Filling machine according to claim 12 or 13, **characterized in that** at least one illumination (37, 38) for illuminating said channel (6) and/or said collection container (4) is provided from the outside.

15. Filling machine according to at least one of the preceding claims, **characterized in that** said inspection opening (5) is disposed in said side wall of said vane cell pump (2).

16. Method for monitoring the state of fouling of a collection container (4) of a filling machine (1) and/or a channel (6) via which said collection container is in communication with said inspection opening according to at least one of the claims 1 to 15, **characterized in that** said channel (6) and/or said collection container (6) can be inspected through an inspection opening (5) in particular when said cover of a vane cell pump (2) is closed.

17. Method according to claim 16, **characterized in that** said channel (6) to said collection container (4) is cleaned via said inspection opening (5).

18. Filling machine according to at least one of claims 1 to 15, **characterized in that** said evacuation opening (8) and/or a channel section (14) being in communication with said evacuation opening (8) can be inspected through said inspection opening (5).

## Revendications

1. Machine de remplissage (1) destinée à assurer le conditionnement par remplissage d'une masse pâteuse, notamment pour la fabrication de saucisses, comprenant
- une pompe à palettes (2) pour assurer le transport de la masse pâteuse,
- une pompe à vide (3) pour produire une dépression dans les cellules de palettes (7) de la pompe à palettes (2),
la pompe à palettes (2) étant reliée à la pompe à vide (3) par l'intermédiaire d'un récipient de collecte (4) pour de la masse pâteuse ayant été entraînée, **caractérisée par**
une ouverture d'inspection (5), qui est reliée par l'intermédiaire d'un canal (6) au récipient de collecte (4), pour l'inspection du canal (6) et/ou du récipient de collecte (4).

2. Machine de remplissage selon la revendication 1, **caractérisée en ce que** le canal (6) et/ou le récipient de collecte (4) sont librement visibles à travers l'ouverture d'inspection, à partir d'une position au-dessus du côté supérieur (50) du carter de machine (11), l'ouverture d'inspection (5) étant avantageusement située dans un plan qui est incliné de 0° à 45°, notamment de 0° à 15° par rapport à un plan horizontal.

3. Machine de remplissage selon la revendication 1, **caractérisée en ce que** le canal (6) est en liaison avec une ouverture de mise sous vide (8) dans la pompe à palettes (2).

4. Machine de remplissage selon l'une au moins des revendications 1 à 3, **caractérisée en ce que** l'ouverture d'inspection (5) est agencée dans un couvercle (9) de la pompe à palettes (2) ou dans un carter de pivotement (10) sur lequel est fixé le couvercle (9), ou bien dans un carter de machine (11), de manière telle, que le canal (6) et/ou le récipient de collecte (4) puissent être inspectés à travers l'ouverture d'inspection (5) lorsque le couvercle (9) est fermé.

5. Machine de remplissage selon l'une au moins des revendications précédentes, **caractérisée en ce qu'**il existe au moins un trajet de faisceau optique rectiligne, qui relie l'ouverture d'inspection (5) à une entrée (36a) vers le récipient de collecte, notamment le canal (6) s'étendant sensiblement de manière rectiligne, en particulier sous un angle de 0° à 45°, de préférence de 0° à 15°, par rapport à un axe longitudinal vertical de la machine de remplissage (1).

6. Machine de remplissage selon l'une au moins des revendications précédentes, **caractérisée en ce que** l'ouverture de mise sous vide (8) se trouve dans le couvercle (9) de la pompe à palettes (2).

7. Machine de remplissage selon l'une au moins des revendications 1 à 6, **caractérisée en ce que** l'ouverture d'inspection (5) peut être fermée, notamment à l'aide d'un élément de fermeture (12), de préférence un piston (12) mobile axialement, et/ou l'élément de fermeture (12) présente une jauge de visualisation.

8. Machine de remplissage selon l'une au moins des revendications précédentes, **caractérisée en ce que** l'ouverture d'inspection (5) est agencée dans la zone supérieure d'un évidement (13), le canal (6) débouchant notamment dans la zone inférieure dans l'évidement (13), et un autre tronçon de canal (14) relié à l'ouverture de mise sous vide débouche également notamment dans la zone inférieure (15) dans l'évidement (13).

9. Machine de remplissage selon la revendication 8, **caractérisée en ce que** le piston (12) mobile axialement peut être déplacé axialement dans l'évidement (13) et peut, dans une position inférieure, isoler le canal (6) dudit autre tronçon de canal (14), et/ou peut être enlevé de l'évidement (13), et/ou peut être déplacé suffisamment vers le haut pour permettre une purge d'air du canal (6) et dudit autre tronçon de canal (14).

10. Machine de remplissage selon l'une au moins des revendications précédentes, **caractérisée en ce qu'**il est prévu un vérin de fermeture entraîné (16), qui permet de fermer la liaison de vide entre la pompe à vide (3) et la pompe à palettes (2).

11. Machine de remplissage selon au moins la revendication 7, **caractérisée en ce que** dans l'élément de fermeture (12) et/ou dans le couvercle (9) de la pompe à palettes (2) est intégré un capteur (17), notamment pour mesurer la température et/ou la pression ou le niveau de remplissage, ou bien un capteur optique, qui assure un relevé optique du canal (6) et/ou du récipient de collecte et une représentation correspondante sur un écran.

12. Machine de remplissage selon l'une au moins des revendications précédentes, **caractérisée en ce que** le canal (6) est réalisé au moins par secteurs, en un matériau transparent.

13. Machine de remplissage selon l'une au moins des revendications précédentes, **caractérisée en ce que** le récipient de collecte (4) est réalisé au moins en partie, en un matériau transparent.

14. Machine de remplissage selon la revendication 12 ou la revendication 13, **caractérisée en ce qu'**il est prévu un éclairage (37, 38) pour éclairer, de l'extérieur, le canal (6) et/ou le récipient de collecte (4) .

15. Machine de remplissage selon l'une au moins des revendications précédentes, **caractérisée en ce que** l'ouverture d'inspection (5) est agencée dans la paroi latérale de la pompe à palettes (2).

16. Procédé pour assurer la surveillance de l'état d'encrassement d'un récipient de collecte (4) d'une machine de remplissage (1), ou bien d'un canal (6) par l'intermédiaire duquel le récipient de collecte est relié à l'ouverture d'inspection, selon l'une au moins des revendications 1 à 15, **caractérisé en ce que** notamment dans le cas d'un couvercle fermé d'une pompe à palettes (2), il est possible d'inspecter le canal (6) et/ou le récipient de collecte (4) par l'intermédiaire d'une ouverture d'inspection (5).

17. Procédé selon la revendication 16, **caractérisé en ce que** le canal (6) au récipient de collecte (4) est nettoyé par l'intermédiaire de l'ouverture d'inspection (5) .

18. Machine de remplissage selon l'une au moins des revendications 1 à 15, **caractérisée en ce qu'**à travers l'ouverture d'inspection (5), il est possible d'inspecter l'ouverture de mise sous vide (8) et/ou un tronçon de canal (14), qui est en communication avec l'ouverture de mise sous vide (8).
